# EUROPEAN PATENT APPLICATION

(11) **EP 4 109 357 A2**
(43) Date of publication of application: **28.12.2022**
(21) Application number: 22201828.5
(22) Date of filing: 17.10.2022
(51) Int. Cl.: G06N 20/20, G10L 25/63

(54) **MODEL TRAINING METHOD, APPARATUS AND STORAGE MEDIUM**

(30) Priority: 08.12.2021 CN 202111493257
(71) Applicant: Beijing Baidu Netcom Science Technology Co., Ltd., Beijing 100085 (CN)
(72) Inventor: LI, Chao, BEIJING, 100085 (CN)
(74) Representative: von Tietzen und Hennig, Nikolaus

(57) **Abstract**

The present disclosure provides a model training method and apparatus, a medium, and relates to the field of artificial intelligence, in particular to the field of speech technologies. An implementation solution is: determining reference classification and reference confidence of sample data, wherein the reference classification and the reference confidence are obtained by utilizing a plurality of classifiers to classify the sample data; inputting the sample data into a to-be-trained model to obtain a first predicted classification and a first confidence output by the to-be-trained model; and adjusting parameters of the to-be-trained model based on at least the reference classification and the reference confidence of the sample data, and the first predicted classification and the first confidence.

## Description

### TECHNICAL FIELD

The present disclosure relates to the technical field of artificial intelligence, particularly relates to the technical field of speech, and specifically relates to model training method and apparatus, a computer readable storage medium and a computer program product.

### BACKGROUND ART

Artificial intelligence is a subject for studying to enable a computer to simulate a certain thought process and intelligent behavior (such as learning, reasoning, thinking and planning) of people, and has both a technology in a hardware level and a technology in a software level. An artificial intelligence hardware technology generally includes technologies such as a sensor, a dedicated artificial intelligence chip, cloud computing, distributed storage and big data processing. An artificial intelligence software technology mainly includes several major directions of a computer vision technology, a speech recognition technology, a natural language processing technology, machine learning/deep learning, a big data processing technology, a knowledge mapping technology, etc.

A method described in this part is not necessarily a method that has been conceived or employed previously. Unless otherwise specified, it should not be assumed that any method described in this part is regarded as the prior art only because it is included in this part. Similarly, unless otherwise specified, a problem mentioned in this part should not be regarded as being publicly known in any prior art.

### SUMMARY OF THE INVENTION

The present disclosure provides model training method and apparatus, a computer readable storage medium and a computer program product.

According to one aspect of the present disclosure, a model training method is provided, including: determining reference classification and reference confidence of sample data, wherein the reference classification and the reference confidence are obtained by utilizing a plurality of classifiers to classify the sample data; inputting the sample data into a to-be-trained model to obtain a first predicted classification and a first confidence output by the to-be-trained model; and adjusting parameters of the to-be-trained model based on at least the reference classification and the reference confidence of the sample data, and the first predicted classification and the first confidence.

According to another aspect of the present disclosure, a model training apparatus is provided, including: a determining unit, configured to determine reference classification and reference confidence of sample data, wherein the reference classification and the reference confidence are obtained by utilizing a plurality of classifiers to classify the sample data; a first obtaining unit, configured to input the sample data into a to-be-trained model to obtain a first predicted classification and a first confidence output by the to-be-trained model; and an adjusting unit, configured to adjust parameters of the to-be-trained model based on at least the reference classification and the reference confidence of the sample data, and the first predicted classification and the first confidence.

According to another aspect of the present disclosure, a non-transitory computer readable storage medium storing a computer instruction is provided, wherein the computer instruction is configured to enable a computer to execute the above method.

According to another aspect of the present disclosure, a computer program product is provided, including a computer program, wherein the computer program, when executed by a processor, implements the above method.

According to one or more embodiments of the present disclosure, a training effect for the model can be improved.

It should be understood that the content described in this part is not intended to identify key or important features of the embodiments of the present disclosure, and is not configured to limit the scope of the present disclosure as well. Other features of the present disclosure will become easily understood through the following specification.

### BRIEF DESCRIPTION OF THE DRAWINGS

Accompanying drawings exemplarily show the embodiments, constitute a part of the specification, and together with text description of the specification, serve to explain exemplary implementations of the embodiments. The shown embodiments are only for the purpose of illustration, and do not limit the scope of the claim. In all the accompanying drawings, the same reference numerals refer to the similar but not necessarily the same elements.
Fig. 1 shows a schematic diagram of an exemplary system in which various methods described herein may be implemented according to an embodiment of the present disclosure.
Fig. 2 shows a flow chart of a model training method according to an embodiment of the present disclosure.
Fig. 3 shows a flow chart of a speech data processing method according to an embodiment of the present disclosure.
Fig. 4 shows a structural block diagram of a model training apparatus according to an embodiment of the present disclosure.
Fig. 5 shows a structural block diagram of a speech data processing apparatus according to an embodiment of the present disclosure.
Fig. 6 shows a structural block diagram of an exemplary electronic device capable of being used for implementing an embodiment of the present disclosure.

### DETAILED DESCRIPTION OF THE EMBODIMENTS

The exemplary embodiment of the present disclosure is illustrated below with reference to the accompanying drawings, including various details of the embodiment of the present disclosure for aiding understanding, and they should be regarded as being only exemplary. Therefore, those ordinarily skilled in the art should realize that various changes and modifications may be made on the embodiments described here without departing from the scope of the present disclosure. Similarly, for clarity and simplicity, the following description omits description of a publicly known function and structure.

In the present disclosure, unless otherwise noted, describing of various elements by using terms "first", "second" and the like does not intend to limit a position relationship, a time sequence relationship or an importance relationship of these elements, and this kind of terms is only configured to distinguish one element with another element. In some examples, a first element and a second element may refer to the same instance of this element, while in certain cases, they may also refer to different instances based on the contextual description.

The terms used in description of various examples in the present disclosure are only for the purpose of describing the specific examples, and are not intended to limit. Unless otherwise explicitly indicated in the context, if the quantity of the elements is not limited specially, there may be one or more elements. In addition, the term "and/or" used in the present disclosure covers any one of all possible combination modes in the listed items.

In the current field of artificial intelligence, requirements for the prediction capability of the model are constantly increasing. In order to achieve an ideal prediction effect, the related art increasingly relies on a large-scale model to obtain an ideal prediction result. However, the large-scale model has problems of being difficult to deploy and low in computationally efficiency in practical applications.

Based on this, the present disclosure provides a model training method, reference classification and reference confidence of sample data are obtained through a plurality of classifiers, and then the reference classification and the reference confidence are taken as labels of the sample data to train a to-be-trained model. Since the reference classification and the reference confidence can not only reflect the classification of the sample data, but also reflect a degree of correlation between the sample data and the classification, and such "soft labels" based on the reference classification and the reference confidence can provide richer information about the sample data in training of the to-be-trained model, thereby improving a training effect of the to-be-trained model.

The embodiment of the present disclosure will be described below in detail with reference to the accompanying drawings.

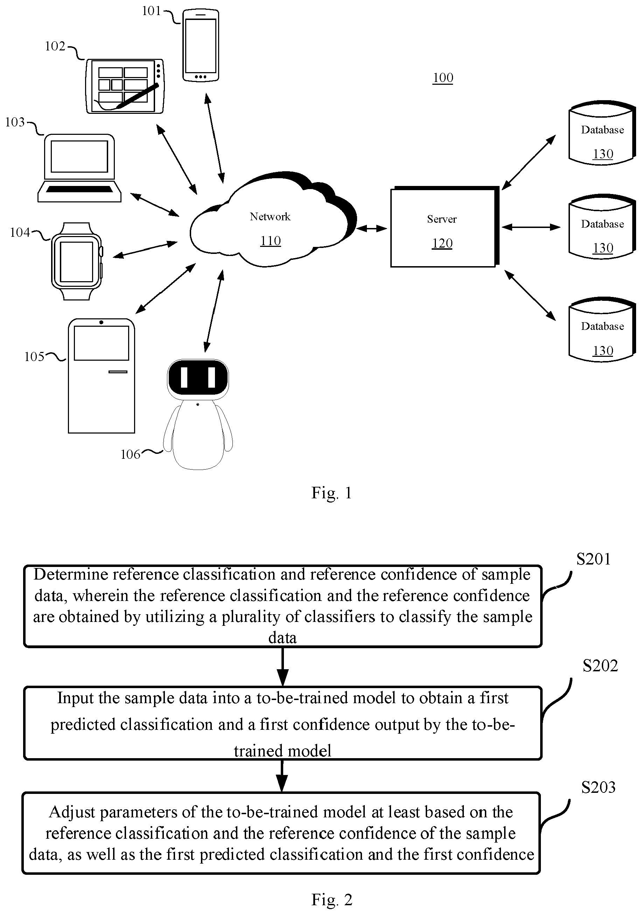

Fig. 1 shows a schematic diagram of an exemplary system 100 in which various methods and apparatuses described herein may be implemented according to an embodiment of the present disclosure. Referring to Fig. 1, the system 100 includes one or more client devices 101, 102, 103, 104, 105 and 106, a server 120, and one or more communication networks 110 for coupling the one or more client devices to the server 120. The client devices 101, 102, 103, 104, 105 and 106 may be configured to execute one or more application programs.

In the embodiment of the present disclosure, the server 120 may run one or more services or software applications that enable a model training method or a speech data processing method to be executed.

In certain embodiments, the server 120 may further provide other services or software applications which may include a non-virtual environment and a virtual environment. In certain embodiments, these services may serve as a web-based service or cloud service to be provided, for example, be provided to users of the client devices 101, 102, 103, 104, 105 and/or 106 under a software as a service (SaaS) model.

In configuration shown in Fig. 1, the server 120 may include one or more components for implementing functions executed by the server 120. These components may include a software component, a hardware component or their combinations capable of being executed by one or more processors. The users operating the client devices 101, 102, 103, 104, 105 and/or 106 may sequentially utilize one or more client application programs to interact with the server 120, so as to utilize the service provided by these components. It should be understood that various different system configurations are possible, which may be different from the system 100. Therefore, Fig. 1 is an example of a system used for implementing various methods described herein, and is not intended to limit.

The users may use the client devices 101, 102, 103, 104, 105 and/or 106 to obtain to-be-recognized speech data. The client devices may provide an interface that enables the users of the client devices to be capable of interacting with the client devices. The client devices may further output information to the users via the interface. Although Fig. 1 describes the six client devices, those skilled in the art should understand that the present disclosure may support any quantity of client devices.

The client devices 101, 102, 103, 104, 105 and/or 106 may include various types of computer devices, such as a portable handheld device, a general-purpose computer (such as a personal computer and a laptop computer), a workstation computer, a wearable device, an intelligent screen device, a self-service terminal device, a service robot, a game system, a thin client, various message transceiving devices, a sensor or other sensing devices, etc. These computer devices may run various types and versions of software application programs and operating systems, such as MICROSOFT Windows, APPLE iOS, a UNIX-like operating system, Linux or Linux-like operating system (such as GOOGLE Chrome OS); or include various mobile operating systems, such as MICROSOFT Windows Mobile OS, iOS, Windows Phone, and Android. The portable handheld device may include a cellular phone, an intelligent telephone, a tablet computer, a personal digital assistant (PDA), etc. The wearable device may include a head-mounted display (such as smart glasses) and other devices. The game system may include various handheld game devices, a game device supporting Internet, etc. The client devices can execute various different application programs, such as various Internet-related application programs, a communication application program (such as an electronic mail application program), and a short message service (SMS) application program, and may use various communication protocols.

A network 110 may be any type of network well known by those skilled in the art, and it may use any one of various available protocols (including but not limited to TCP/IP, SNA, IPX, etc.) to support data communication. As an example only, the one or more networks 110 may be a local area network (LAN), an Ethernet-based network, a Token-Ring, a wide area network (WAN), an Internet, a virtual network, a virtual private network (VPN), an intranet, an extranet, a public switched telephone network (PSTN), an Infrared network, a wireless network (such as Bluetooth and WIFI), and/or any combination of these and/or other networks.

The server 120 may include one or more general-purpose computers, dedicated server computers (such as personal computer (PC) servers, UNIX servers, and midrange servers), blade servers, mainframe computers, server clusters or any other proper arrangements and/or combinations. The server 120 may include one or more virtual machines running a virtual operating system, or other computing architectures involving virtualization (such as one or more flexible pools of a logic storage device capable of being virtualized so as to maintain a virtual storage device of the server). In various embodiments, the server 120 may run one or more services or software applications providing the functions described hereunder.

A computing unit in the server 120 may run one or more operating systems including any above operating system and any commercially available server operating system. The server 120 may further run any one of various additional server application programs and/or a middle tier application program, including an HTTP server, an FTP server, a CGI server, a JAVA server, a database server, etc.

In some implementations, the server 120 may include one or more application programs, so as to analyze and merge data feed and/or event update received from the users of the client devices 101, 102, 103, 104, 105 and/or 106. The server 120 may further include one or more application programs, so as to display the data feed and/or a real-time event via one or more display devices of the client devices 101, 102, 103, 104, 105 and/or 106.

In some implementations, the server 120 may be a server of a distributed system, or a server in combination with a blockchain. The server 120 may also be a cloud server, or an intelligent cloud computing server or an intelligent cloud host with an artificial intelligence technology. The cloud server is a hosting product in a cloud computing service system, so as to solve the defects of large management difficulty and weak business scalability in service of a traditional physical host and a Virtual Private Server (VPS).

The system 100 may further include one or more databases 130. In certain embodiments, these databases may be configured to store data and other information. For example, one or more of the databases 130 may be configured to store information such as an audio file and a video file. The databases 130 may be resident at various positions. For example, a database used by the server 120 may be at a server 120 local, or may be away from the server 120, and may be in communication with the server 120 via network-based or dedicated connection. The databases 130 may be different types. In certain embodiments, the database used by the server 120 may be, for example, a relational database. One or more of these databases may store, update and retrieve data to the database and from the database in response to a command.

In certain embodiments, one or more of the databases 130 may further be used by the application program to store application program data. The database used by the application program may be different types of databases, such as a key value memory pool, an object memory pool, or a conventional memory pool supported by a file system.

The system 100 in Fig. 1 may be configured and operated in various modes, so as to be capable of applying various methods and apparatuses described according to the present disclosure.

In the technical solution of the present disclosure, related processing such as collecting, storing, using, processing, transmitting, providing and disclosing of user personal information all conforms to provisions of relevant laws and regulations, and does not violate public order and moral.

Fig. 2 shows a model training method according to an exemplary embodiment of the present disclosure, including: step S201, reference classification and reference confidence of sample data are determined, wherein the reference classification and the reference confidence are obtained by utilizing a plurality of classifiers to classify the sample data; step S202, the sample data are input into a to-be-trained model to obtain a first predicted classification and a first confidence output by the to-be-trained model; and step S203, parameters of the to-be-trained model are adjusted based on at least the reference classification and the reference confidence of the sample data, and the first predicted classification and the first confidence.

Since the reference classification and the reference confidence can not only reflect the classification of the sample data, but also reflect a degree of correlation between the sample data and the classification, and such "soft labels" based on the reference classification and the reference confidence can provide richer information about the sample data in training of the to-be-trained model, thereby improving a training effect of the to-be-trained model.

For step S201, according to some embodiments, the sample data may be speech data. According to some embodiments, the reference classification may include a plurality of sentiment classifications, and the reference confidence includes confidence probability values corresponding to the plurality of sentiment classifications. The model trained from this can effectively recognize the sentiment type of the speech data.

In one implementation, the reference confidence includes the confidence probability value corresponding to each of the plurality of sentiment classifications respectively.

According to some embodiments, determining the reference classification and the reference confidence of the sample data may include: the sample data are input into the plurality of classifiers respectively to obtain a second predicted classification and a second confidence corresponding to each classifier of the plurality of classifiers; and the second predicted classification and the second confidence corresponding to each classifier of the plurality of classifiers are fused to obtain the reference classification and the reference confidence of the sample data. Thus, the reference classification and the reference confidence of the sample data can be determined based on the second predicted classification and the second confidence of the plurality of independent classifiers, so that the obtained reference classification and the reference confidence can have prediction capability of the various different classifiers, thereby improving accuracy of the reference classification and the reference confidence.

For example, the second predicted classification and the second confidence corresponding to one classifier of the plurality of classifiers may be exemplarily represented as shown in Table 1 below:

**Table 1**

| Speech data number | Happy | Serious | Sad | Angry | Confusion | Other |
|---|---|---|---|---|---|---|
| 1 | 0 | 0.5 | 0 | 0.5 | 0 | 0 |
| 2 | 0 | 0 | 0.3 | 0.7 | 0 | 0 |
| 3 | 0 | 0 | 0.15 | 0.75 | 0.1 | 0 |

For the plurality of classifiers, the second predicted classification and the second confidence corresponding to each classifier may be expressed as shown in Table 1 above.

The second predicted classification and the second confidence corresponding to each classifier of the plurality of classifiers are summarized, and summarized results shown in Table 2 below may be exemplarily obtained:

**Table 2**

| Speech data number | Happy | Serious | Sad | Angry | Confusion | Other |
|---|---|---|---|---|---|---|
| 1 | 0 | 8 | 0 | 1 | 1 | 0 |
| 2 | 0 | 0 | 5.5 | 3.5 | 1 | 0 |
| 3 | 6 | 1 | 1.5 | 0.5 | 1 | 0 |

The summarized results of Table 2 above are normalized, and results shown in Table 3 below may be further obtained:

**Table 3**

| Speech data number | Happy | Serious | Sad | Angry | Confusion | Other |
|---|---|---|---|---|---|---|
| 1 | 0 | 0.8 | 0 | 0.1 | 0.1 | 0 |
| 2 | 0 | 0 | 0.55 | 0.35 | 0.1 | 0 |
| 3 | 0.6 | 0.1 | 0.15 | 0.05 | 0.1 | 0 |

According to some embodiments, the plurality of classifiers may be obtained by training based on different types of initial sample data, thereby enabling the different classifiers to have differentiated classification capabilities.

In some implementations, the plurality of classifiers may be obtained by training based on the different types of initial sample data respectively.

According to some embodiments, the method may further include: clustering processing is executed on the plurality of initial sample data before inputting the sample data into the plurality of classifiers respectively, so as to divide the plurality of initial sample data into a first quantity of data sets, wherein each data set includes one type of initial sample data, and the first quantity is greater than the quantity of the plurality of classifiers; and for each classifier of the plurality of classifiers, the classifier is trained based on one data set in the first quantity of data sets, and the data sets on which training of each classifier of the plurality of classifiers is based are different from each other. Thus the initial sample data can be conveniently divided into categories, and a plurality of differentiated classifiers can be obtained by training respectively.

According to some embodiments, the second predicted classification includes a plurality of subclassifications and the plurality of subclassifications corresponding to each classifier of the plurality of classifiers are the same with each other, and the second confidence includes a plurality of sub-confidences respectively corresponding to the plurality of subclassifications, and wherein, fusing the second predicted classification and the second confidence corresponding to each classifier of the plurality of classifiers may include: for each subclassification of the plurality of subclassifications, a weighted sum of a plurality of sub-confidences corresponding to the subclassification of each classifier of the plurality of classifiers is determined; and the plurality of subclassifications are determined as the reference classification, and the weighted sum corresponding to each subclassification of the plurality of subclassifications is determined as the reference confidence. By weighting the sub-confidence corresponding to each subclassification, the second predicted classification and the second confidence obtained by each classifier can be conveniently fused.

According to some embodiments, the method further includes: a type of the sample data is determined; and a weight value of each classifier of the plurality of classifiers is determined based on the type of the sample data; and for each subclassification of the plurality of subclassifications, determining the weighted sum of the sub-confidence corresponding to the subclassification of each classifier of the plurality of classifiers may include: the weighted sum corresponding to the subclassification is determined based on the weight value of each classifier of the plurality of classifiers and the sub-confidence corresponding to the subclassification of the classifier.

For step S202 and step S203, according to some embodiments, the sample data have a true classification, and wherein adjusting the parameters of the to-be-trained model based on at least the reference classification and the reference confidence of the sample data, and the first predicted classification and the first confidence further includes: parameters of a to-be-trained classifier are adjusted based on the true classification of the sample data, the reference classification and the reference confidence of the sample data, and the first predicted classification and the first confidence. In this way, while training is performed through the "soft labels" such as the reference classification and the reference confidence, auxiliary training is performed through "hard labels" such as a true classification, which can further improve the training effect.

According to some embodiments, first adjustment may be performed on the parameters of a to-be-trained classifier based on a first difference between the true classification of the sample data and the first predicted classification and the first confidence; and second adjustment is performed on the parameters of the to-be-trained classifier based on a second difference between the reference classification and the reference confidence of the sample data and the first predicted classification and the first confidence.

It may be understood that the above first adjustment and second adjustment may be executed at one time, or may be executed synchronously.

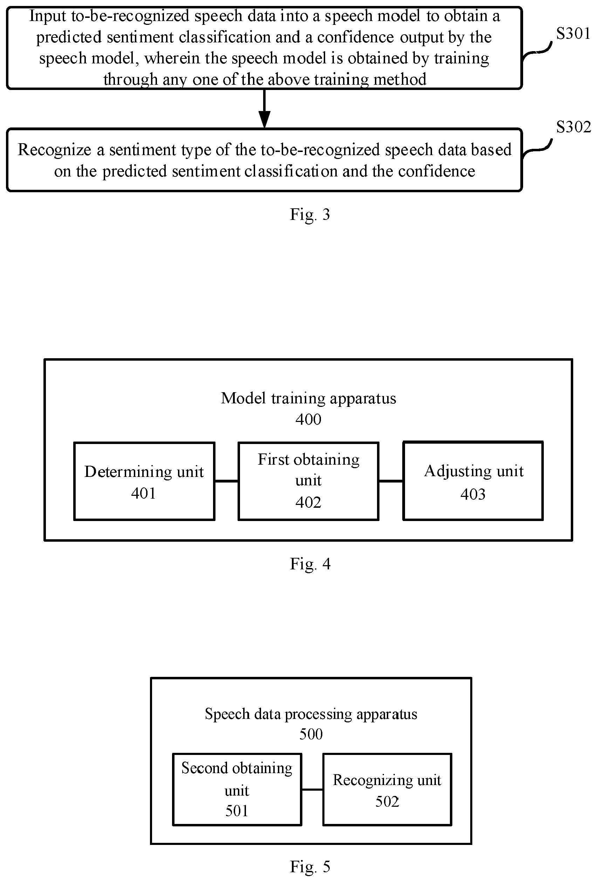

Fig. 3 shows a speech data processing method according to an exemplary embodiment of the present disclosure, including: step S301, to-be-recognized speech data are input into a speech model to obtain a predicted sentiment classification and a confidence output by the speech model, wherein the speech model is obtained by training through any one of the above training method; and step S302, a sentiment type of the to-be-recognized speech data is recognized based on the predicted sentiment classification and the confidence. Thus, the sentiment type of the to-be-recognized speech data can be accurately recognized according to the speech model obtained by training.

Fig. 4 shows a model training apparatus according to an exemplary embodiment of the present disclosure. The apparatus 400 includes: a determining unit 401, configured to determine reference classification and reference confidence of sample data, wherein the reference classification and the reference confidence are obtained by utilizing a plurality of classifiers to classify the sample data; a first obtaining unit 402, configured to input the sample data into a to-be-trained model to obtain a first predicted classification and a first confidence output by the to-be-trained model; and an adjusting unit 403, configured to adjust parameters of the to-be-trained model based on at least the reference classification and the reference confidence of the sample data, and the first predicted classification and the first confidence.

According to some embodiments, the determining unit includes: an obtaining subunit, configured to input the sample data into the plurality of classifiers respectively to obtain a second predicted classification and a second confidence corresponding to each classifier of the plurality of classifiers; and a fusing subunit, configured to fuse the second predicted classification and the second confidence corresponding to each classifier of the plurality of classifiers to obtain the reference classification and the reference confidence of the sample data.

According to some embodiments, the plurality of classifiers are obtained by training based on the different types of initial sample data respectively.

According to some embodiments, the apparatus further includes: a clustering unit, configured to execute clustering processing on the plurality of initial sample data before inputting the sample data into the plurality of classifiers respectively, so as to divide the plurality of initial sample data into a first quantity of data sets, wherein each data set includes one type of initial sample data, and the first quantity is greater than the quantity of the plurality of classifiers; and a training unit, configured to, for each classifier of the plurality of classifiers, train the classifier based on one data set in the first quantity of data sets, and the data sets on which training of each classifier of the plurality of classifiers is based being different from each other.

According to some embodiments, the second predicted classification includes a plurality of subclassifications and the plurality of subclassifications corresponding to each classifier of the plurality of classifiers are the same with each other, and the second confidence includes a plurality of sub-confidences respectively corresponding to the plurality of subclassifications, and wherein, the fusing unit includes: a subunit configured to, for each subclassification of the plurality of subclassifications, determine a weighted sum of a plurality of sub-confidences corresponding to the subclassification of each classifier of the plurality of classifiers; and a subunit configured to determine the plurality of subclassifications as the reference classification, and determine the weighted sum corresponding to each subclassification of the plurality of subclassifications as the reference confidence.

According to some embodiments, the sample data have a true classification, and wherein the adjusting unit includes: a subunit configured to adjust parameters of a to-be-trained classifier based on the true classification of the sample data, the reference classification and the reference confidence of the sample data, and the first predicted classification and the first confidence.

According to some embodiments, the sample data are speech data.

According to some embodiments, the reference classification includes a plurality of sentiment classifications, and the reference confidence includes confidence probability values corresponding to the plurality of sentiment classifications.

Fig. 5 shows a speech data processing apparatus according to an exemplary embodiment of the present disclosure. The apparatus 500 includes: a second obtaining unit 501, configured to input to-be-recognized speech data into a speech model to obtain a predicted sentiment classification and a confidence output by the speech model, wherein the speech model is obtained by training through any one of the above training method; and a recognizing unit 502, configured to recognize a sentiment type of the to-be-recognized speech data based on the predicted sentiment classification and the confidence.

According to an embodiment of the present disclosure, an electronic device is further provided, including: at least one processor; and a memory in communication connection with the at least one processor, wherein the memory stores instructions executable by the at least one processor, and the instructions are executed by the at least one processor, so as to enable the at least one processor to execute any one of the above method.

According to an embodiment of the present disclosure, a non-transitory computer-readable storage medium storing a computer instruction is further provided, wherein the computer instruction is configured to enable a computer to execute any one of the above method.

According to an embodiment of the present disclosure, a computer program product is further provided, including a computer program, wherein the computer program, when executed by a processor, implements any one of the above method.

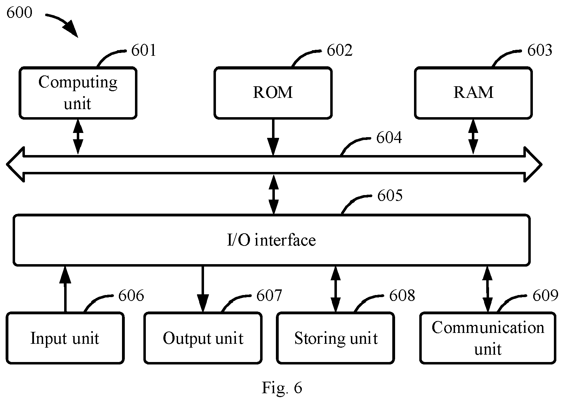

Referring to Fig. 6, a structural block diagram of an electronic device 600 which can serve as a server or a client of the present disclosure will now be described, which is an example of a hardware device capable of being applied to all aspects of the present disclosure. The electronic device aims to express various forms of digital-electronic computer devices, such as a laptop computer, a desk computer, a work bench, a personal digital assistant, a server, a blade server, a mainframe computer and other proper computers. The electronic device may further express various forms of mobile apparatuses, such as a personal digital assistant, a cellular phone, an intelligent phone, a wearable device and other similar computing apparatuses. Parts shown herein, their connection and relations, and their functions only serve as an example, and are not intended to limit implementation of the present disclosure described and/or required herein.

As shown in Fig. 6, the electronic device 600 includes a computing unit 601, which may execute various proper motions and processing according to a computer program stored in a read-only memory (ROM) 602 or a computer program loaded from a storing unit 608 to a random access memory (RAM) 603. In the RAM 603, various programs and data required by operation of the electronic device 600 may further be stored. The computing unit 601, the ROM 602 and the RAM 603 are connected with one another through a reference line 604. An input/output (I/O) interface 605 is also connected to the reference line 604.

A plurality of parts in the electronic device 600 are connected to the I/O interface 605, and including: an input unit 606, an output unit 607, the storing unit 608 and a communication unit 609. The input unit 606 may be any type of device capable of inputting information to the electronic device 600, the input unit 606 may receive input digital or character information, and generates key signal input relevant to user setting and/or functional control of the electronic device, and may include but not limited to a mouse, a keyboard, a touch screen, a trackpad, a trackball, an operating lever, a microphone and/or a remote control. The output unit 607 may be any type of device capable of presenting information, and may include but not limited to a display, a loudspeaker, a video/audio output terminal, a vibrator and/or a printer. The storing unit 608 may include but not limited to a magnetic disc and an optical disc. The communication unit 609 allows the electronic device 600 to exchange information/data with other devices through a computer network such as Internet and/or various telecommunication networks, and may include but not limited to a modem, a network card, an infrared communication device, a wireless communication transceiver and/or a chip set, such as a Bluetooth TM device, a 802.11 device, a WiFi device, a WiMax device, a cellular communication device and/or analogues.

The computing unit 601 may be various general and/or dedicated processing components with processing and computing capabilities. Some examples of the computing unit 601 include but not limited to a central processing unit (CPU), a graphic processing unit (GPU), various dedicated artificial intelligence (AI) computing chips, various computing units running a machine learning model algorithm, a digital signal processor (DSP), and any proper processor, controller, microcontroller, etc. The computing unit 601 executes all the methods and processing described above, such as the model training method and the speech data processing method. For example, in some embodiments, the model training method and the speech data processing method may be implemented as a computer software program, which is tangibly contained in a machine readable medium, such as the storing unit 608. In some embodiments, part of or all of the computer program may be loaded into and/or mounted on the electronic device 600 via the ROM 602 and/or the communication unit 609. When the computer program is loaded to the RAM 603 and executed by the computing unit 601, one or more steps of the model training method and the speech data processing method described above may be executed. Alternatively, in other embodiments, the computing unit 601 may be configured to execute the model training method and the speech data processing method through any other proper modes (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally away from each other and usually interact through the communication network. A relationship of the client and the server is generated through computer programs run on a corresponding computer and mutually having a client-server relationship. The server may be a cloud server or a server of a distributed system, or a server in combination with a blockchain.

It should be understood that various forms of flows shown above may be configured to reorder, increase or delete the steps. For example, all the steps recorded in the present disclosure may be executed in parallel, and may also be executed sequentially or in different sequences, as long as the expected result of the technical solution disclosed by the present disclosure may be implemented, which is not limited herein.

Although the embodiments or examples of the present disclosure have been described with reference to the accompanying drawings, it should be understood that the above method, system and device is only an exemplary embodiment or an example, and the scope of the present invention is not limited by these embodiments or examples, but only limited by the authorized claim and equivalent scope thereof. Various elements in the embodiments or the examples may be omitted or may be replaced with their equivalent elements. In addition, all the steps may be executed through the sequence different from that described in the present disclosure. Further, various elements in the embodiments or the examples may be combined in various modes. It is important that with evolution of the technology, many elements described here may be replaced with the equivalent element appearing after the present disclosure.

## Claims

1. A model training method, comprising:
determining (S201) reference classification and reference confidence of sample data, wherein the reference classification and the reference confidence are obtained by utilizing a plurality of classifiers to classify the sample data;
inputting (S202) the sample data into a to-be-trained model to obtain a first predicted classification and a first confidence output by the to-be-trained model; and
adjusting (S203) parameters of the to-be-trained model based on at least the reference classification and the reference confidence of the sample data, and the first predicted classification and the first confidence.

2. The method according to claim 1, wherein determining the reference classification and the reference confidence of the sample data comprises:
inputting the sample data into the plurality of classifiers respectively to obtain second predicted classification and second confidence corresponding to each classifier of the plurality of classifiers; and
fusing the second predicted classification and the second confidence corresponding to each classifier of the plurality of classifiers to obtain the reference classification and the reference confidence of the sample data.

3. The method according to claim 2, wherein the plurality of classifiers are obtained by training based on different types of initial sample data.

4. The method according to claim 3, further comprising:
executing clustering processing on the plurality of initial sample data before inputting the sample data into the plurality of classifiers respectively, so as to divide the plurality of initial sample data into a first quantity of data sets, wherein each data set comprises one type of initial sample data, and the first quantity is greater than the quantity of the plurality of classifiers; and
for each classifier of the plurality of classifiers, training the classifier based on one data set in the first quantity of data sets, the data sets on which training of each classifier of the plurality of classifiers is based being different from each other.

5. The method according to any one of claims 2-4, wherein the second predicted classification comprises a plurality of subclassifications and the plurality of subclassifications corresponding to each classifier of the plurality of classifiers are the same with each other, and the second confidence comprises a plurality of sub-confidences respectively corresponding to the plurality of subclassifications,
and wherein, fusing the second predicted classification and the second confidence corresponding to each classifier of the plurality of classifiers comprises:
for each subclassification of the plurality of subclassifications, determining a weighted sum of a plurality of sub-confidences corresponding to the subclassification of each classifier of the plurality of classifiers; and
determining the plurality of subclassifications as the reference classification, and determining the weighted sum corresponding to each subclassification of the plurality of subclassifications as the reference confidence.

6. The method according to any one of claims 1-5, wherein the sample data has a true classification, and wherein adjusting the parameters of the to-be-trained model based on at least the reference classification and the reference confidence of the sample data, and the first predicted classification and the first confidence further comprises:
adjusting parameters of the to-be-trained classifier based on the true classification of the sample data, the reference classification and the reference confidence of the sample data, and the first predicted classification and the first confidence.

7. The method according to any one of claims 1-6, wherein the sample data is speech data.

8. The method according to claim 7, wherein the reference classification comprises a plurality of sentiment classifications, and the reference confidence comprises confidence probability values corresponding to the plurality of sentiment classifications.

9. The method according to any one of claims 1-8, wherein the to-be-trained model is speech processing model, the method further comprising:
inputting to-be-recognized speech data into the speech processing model to obtain a predicted sentiment classification and a confidence output by the speech processing model; and
recognizing a sentiment type of the to-be-recognized speech data based on the predicted sentiment classification and the confidence.

10. A model training apparatus, comprising:
a determining unit (401), configured to determine reference classification and reference confidence of sample data, wherein the reference classification and the reference confidence are obtained by utilizing a plurality of classifiers to classify the sample data;
a first obtaining unit (402), configured to input the sample data into a to-be-trained model to obtain a first predicted classification and a first confidence output by the to-be-trained model; and
an adjusting unit (403), configured to adjust parameters of the to-be-trained model based on at least the reference classification and the reference confidence of the sample data, and the first predicted classification and the first confidence.

11. The apparatus according to claim 10, wherein the determining unit comprises:
an obtaining subunit, configured to input the sample data into the plurality of classifiers respectively to obtain a second predicted classification and a second confidence corresponding to each classifier of the plurality of classifiers; and
a fusing subunit, configured to fuse the second predicted classification and the second confidence corresponding to each classifier of the plurality of classifiers to obtain the reference classification and the reference confidence of the sample data.

12. The apparatus according to claim 11, wherein the plurality of classifiers are obtained by training based on different types of initial sample data.

13. The apparatus according to claim 12, further comprising:
a clustering unit, configured to execute clustering processing on the plurality of initial sample data before inputting the sample data into the plurality of classifiers respectively, so as to divide the plurality of initial sample data into a first quantity of data sets, wherein each data set comprises one type of initial sample data, and the first quantity is greater than the quantity of the plurality of classifiers; and
a training unit, configured to, for each classifier of the plurality of classifiers, train the classifier based on one data set in the first quantity of data sets, the data sets on which training of each classifier of the plurality of classifiers is based being different from each other.

14. A non-transitory computer readable storage medium storing a computer instruction, wherein the computer instruction is configured to enable a computer to execute the method according to any one of claims 1-9.

15. A computer program product, comprising a computer program, wherein the computer program, when executed by a processor, implements the method according to any one of claims 1-9.
